# EUROPEAN PATENT APPLICATION

(11) **EP 0 886 006 A2**
(43) Date of publication of application: **23.12.1998**
(21) Application number: 98201857.4
(22) Date of filing: 04.06.1998
(51) Int. Cl.: D21H 27/20, D21H 27/38

(54) **Wallpaper**

(30) Priority: 16.06.1997 FI 972540
(71) Applicant: METSÄ-SERLA OY, 02100 Espoo (FI)
(72) Inventor: Haaranoja, Olli, 39100 Hämeenkyrö (FI); Helin, Pertti, 33410 Tampere (FI)
(74) Representative: Hakola, Unto Tapani

(57) **Abstract**

The invention relates to a base paper (1) in a wallpaper to be coated with PVC-based plastic, manufactured of a fibre material. The base paper consists of at least two fibrous layers (1a, 1b).

## Description

The invention relates to a base paper for a wallpaper to be coated with a plastic, the base paper being manufactured of a fibrous material. The invention relates also to a plastic-coated wallpaper comprising a base paper made of a fibrous material and a plastic coating on the base paper.

A wallpaper normally consists of a base paper whose back surface forms the surface to be attached to a wall, and a coating on top of the base paper, for the purpose of offering a good base for printing or a decorating pattern. Suitable coatings for printing include known coatings containing a latex binder and a pigment, which are presented *e.g.* in the European Patent No. 543793 by the applicant.

As wallpaper coatings, also plastic is used, because it can be used to make different surface patterns, it is a good base for printing, and further it is water-tight, which is advantageous if the wallpaper is used *e.g.* in moist facilities. A popular polymeric raw material for coatings of this kind are plastic dispersions containing a synthetic polymer, such as PVC based dispersions that can be spread-coated and applied on the surface to form a uniform tight plastic surface.

A problem with plastic-coated wallpapers of the aforementioned type is that the plastic material of the coating, which typically has a grammage of at least 80 g/m², forms a uniform tight layer on the surface of the base paper in such a manner that it causes problems during the later use of the product. Particularly in use as wallpaper, such a combination of paper consisting of cellulose fibres, and plastic has turned out to be problematic, because plastic does not conform to changes taking place in the base paper, particularly when the reverse side of the paper is wetted with paste, which is necessary in the use of the wallpaper. The selection of the paper quality has not been effective in eliminating this problem. The problem is primarily due to the machine-direction fibre orientation in the paper, resulting in a higher wet expansion in the transverse direction when the paper fibres become wet. In finished plastic-coated elongate strips of wallpaper, the longitudinal direction of the base paper coinciding with the machine direction, this is manifested by strong curling at the side edges.

The purpose of the invention is to eliminate the above-mentioned drawbacks to a major extent and to present a new base paper which is suitable for use as the basic material for plastic-coated wallpapers and which can be well coated *e.g*. with PVC. For attaining this purpose, the base paper is characterised in that it consists of at least two fibrous layers.

By using a two- or multi-layer paper as the base paper for a wallpaper, it is possible to reduce considerably or even totally the problems occurring with a base paper made of a single-layer web. Further, a two- or multi-layer web can be made to have such a layer composition that it has a suitable fibre grade in the layer forming the surface and a suitable fibre grade in the layer forming the back.

It is also a purpose of the invention to present a plastic-coated wallpaper that does not exhibit the above-mentioned drawbacks in connection with attachment to a wall. For achieving this purpose, the plastic-coated wallpaper is primarily characterised in that its base paper consists of at least two fibrous layers. A two- or multi-layer paper behaves in a more uniform way in mutually perpendicular directions when it is moistened.

Two-layer base paper has been previously used as base paper for wallpaper to be printed with direct printing, *i.e.* without a plastic coating. Because these wallpapers with direct printing have not exhibited corresponding problems to the same extent as the plastic-coated wallpapers, the advantageous properties of the two-layer papers have not been previously noticed. Two-layer paper has also been used as base paper for a wallpaper extrusion-coated with polyethylene according to German Utility Model No. 8600174 to improve its visual effects, the base paper having a relatively large grammage, in the range from 180 to 230 g/m². The relatively thin extrusion coating of polyethylene, ca. 30 g/m² at maximum, may cause problems due to contraction upon cooling.

In the following, the invention will be described in more detail with reference to the appended drawings, in which
- Fig. 1: shows the base paper of a wallpaper to be coated with plastic,
- Fig. 2: shows a plastic-coated wallpaper,
- Fig. 3: shows a second embodiment of the base paper, and
- Fig. 4: shows a third embodiment of the base paper.

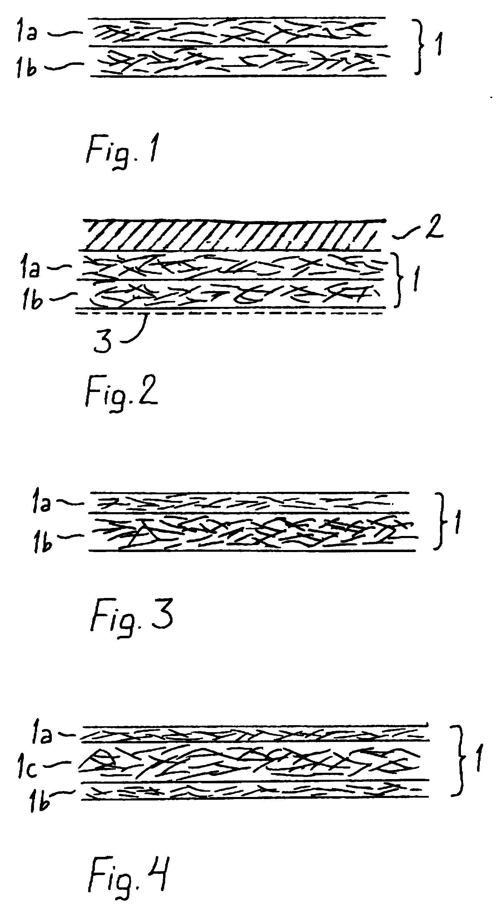

Figure 1 shows a cross-sectional view of the base paper 1 according to the invention for a wallpaper to be coated with plastic. The base paper consists of two fibrous layers 1a, 1b, which both consist of cellulose fibres used in the manufacture of paper or board, their alternatives being described further below. The base paper 1 is a uniform paper which nevertheless has a distinguishable layered construction and an interface between the layers and which is formed by known techniques from a two-layer web manufactured in a paper or board machine. The layer 1a forms a surface which receives the coating of the wallpaper, and the layer 1b forms the back whose back surface is intended to be attached to a wall or another structure to be covered by the wallpaper in a known way by using a paste. In a known manner, the back surface can also be pre-pasted in connection with the manufacture of the wallpaper, whereby it is only wetted before the attachment, or it can be pasted only when attached.

Figure 2 shows a finished wallpaper, and thus it comprises on top of the base paper 1 a plastic coating 2 consisting of a plastic which covers the base paper tightly. The basic plastic structure is particularly some thermoformable synthetic polymer, such as PVC (polyvinyl chloride). Under PVC or PVC-based is meant also copolymers of polyvinyl chloride. A broken line 3 indicates a possible pre-paste on the back surface. The coating 2, after being applied on the base paper as a dispersion and heat-treated, forms a tight plastic layer having a uniform structure in the direction of the plane of the base paper and in the direction perpendicular to it.

The plastic layer 2 can be subjected to various aftertreatment processes known in the art of wallpaper processing.

The base papers 1 shown in Figs. 1 and 2 consist of two layers with equal thickness. Figure 3 shows an embodiment of the base paper where the layers have different thicknesses, whereby they have differing grammages. Thus, the grammage of the surface layer 1a forming the surface to be coated is smaller than the grammage of the back layer 1b forming the back of the paper. The fibre mixture of the surface layer 1a and possible additives to be used in connection with the paper manufacture can thus be chosen precisely according to the surface properties, and it can thus be of a more expensive fibre than the fibre to be used in the back. In the selection of the fibre for the back layer 1b, it can also be considered that it will be moistened with water upon use of the wallpaper and that a pre-paste will possibly be applied on it.

In the surface layer 1a, it is possible to use for example chemical pulp having an IGT surface strength of ca. 1.5 m/s with a semi-viscose oil. In the back layer 1b, it is possible to use mechanical pulp having a corresponding surface strength of ca. 0.5 m/s. If either or both of the layers are fibre blends, it is possible to select the blend ratios particularly so that the share of the fibre with better surface strength properties is greater in the surface layer than in the back layer.

Examples of possible compositions, in a non-restricted way, include the following:

### Base paper A

― surface layer of chemical pulp 20 g/m²
― back layer of mechanical pulp, broke and chemical pulp in combination, 70 g/²

### Base paper B

― surface layer of mechanical pulp, broke and chemical pulp in combination, 30 g/m²
― back layer of mechanical pulp, broke and chemical pulp in combination, 60 g/²

In the latter case, the fibre compositions can thus be fully identical, and the layers differ from each other only in grammage.

In view of the above-mentioned surface strength properties, the most advantageous structure of the fibres is such that the share of the chemical pulp is greater in the surface layer than in the back layer, and, in a corresponding manner, the share of the mechanical pulp and/or the broke is greater in the back layer than in the surface layer. However, in the selection of the fibres or fibre blends, also other criteria can be used, and it may even be necessary to provide the greatest surface strength in the fibre layer bounded by the back surface of the paper, taking into account the substances applied on it, in which case the composition of layers can be reversed from that mentioned above.

Figure 4 shows an alternative where the base paper 1 has a surface layer 1a and a back layer 1b, but between them there is an intermediate layer 1c, *i.e.* the base paper is a three-layer product. Also in this case the surface layer 1a can comprise more chemical pulp than the rest of the paper consisting of the intermediate layer 1c and the back layer 1b, *i.e.* the back. In the selection of the fibres for the intermediate layer and the back layer, it can be considered that the intermediate layer 1c acts as a kind of body layer and the back layer 1b will get in contact with paste and water. Thus, it is possible that the back layer 1b also has more chemical pulp than the intermediate layer.

Similarly, the grammage ratios between the fibre layers can vary. The grammage of the surface layer 1a forming the surface that receives the plastic coating can be smaller than the grammage of the back forming the rest of the paper (the back layer 1b in a two-layer product or the intermediate layer 1c and the back layer 1b in a three-layer product), particularly in case that the fibre or fibre mixture to be used in the surface layer 1a is more expensive, due to its special properties. Particularly in two-layer papers, these grammages can also be equal or also in the order that the back layer 1b has a smaller grammage than the surface layer 1a.

The above-mentioned base paper B was subjected to tests on tensile strength, elongation and wet expansion, and the coated paper was subjected to curling tests, and they were compared with the results obtained with paper consisting of one fibre layer and having the same fibre composition and grammage. The results are shown in the following table.

**TABLE**

| Base paper | two-layer paper 90 g/m² | singe-layer paper REFERENCE SAMPLE 1 | single-layer paper REFERENCE SAMPLE 2 |
|---|---|---|---|
| grammage (g/m²) | 90,2 | 89,4 | 89,5 |
| thickness (µm) | 140 | 140 | 138 |
| tensile strength md (kN/m) | 3,7 | 3,9 | 4,1 |
| tensile strength cd (kN/m) | 1,8 | 1,8 | 1,9 |
| tensile strength ratio | 2,0 | 2,3 | 2,2 |
| elongation md (%) | 1,3 | 1,2 | 1,2 |
| elongation cd (%) | 2,9 | 3,0 | 3,3 |
| AMBERTEC formation dispersion (%) | 6,0 | 7,4―8,0 | 8,0―9,9 |
| wet expansion in the middle of the paper web (%) | 1,1 | 1,3 | 1,5 |
| Curling of the edges of a plastic (PVC) coated paper from the horizontal plane (mm), 2 min after wetting | 6 | 13 | 11 |
| NOTE: md = machine direction, cd = cross-machine direction The values obtained with single-layer papers (reference sample 1 and 2) are production average values in the long run. | | | |

The obtained low tensile strength ratio represents good dimension stability which also correlates with low wet expansion. This is also shown by the wet expansion tests. Greater stretch in the machine direction and good formation (uniformity of formation) gives the base paper better runability when converted, *i.e.* for example when coated. The formation dispersion (small-scale grammage fluctuation) is low, which describes the evenness of the material technical properties of the paper and correlates with good runability and low susceptibility to damages.

A general advantage with two- or multi-layer paper, irrespective of the factors on formation, is better rigidity, thanks to the layered structure.

The total grammage of the base paper can naturally vary, and it can be different from the 90 g/m² given in the examples above. The total grammage of the different layers can vary from 80 to 180 g/m², preferably from 80 to 120 g/m².

The base paper can be manufactured in board machines by normal methods for manufacturing two- or multi-layer webs, combining two or more separate stock flows.

In practice, this can be conducted *e.g.* with a multi-layer headbox where the stock flows are combined at low consistency, but preferably so that two or more relatively dilute stock flows are passed from their separate headboxes to their separate dewatering formers, and the fibre layers produced from the stock flows are connected with each other before the press section at a dry matter content of less than 25 %, preferably less than 20 %. it is known to obtain good formation, *i.e.* small formation deviation, as well as a low fibre orientation ratio more easily by using greater relative water contents.

The resulting base paper is further converted in known coating machines where it is coated with a tight plastic layer, most usually a PVC layer, having a grammage which is usually at least 80 g/m², commonly ca. 100 g/m². Thus, a wallpaper of Fig. 2, ready for printing, is obtained.

## Claims

1. A base paper (1) for a wallpaper to be coated with PVC-based plastic, the base paper being manufactured of a fibre material, **characterised** in that the base paper consists of at least two fibrous layers (1a, 1b).

2. A base paper according to claim 1, **characterised** in that the fibre compositions of the fibrous layers (1a, 1b) are different.

3. A base paper according to claim 2, **characterised** in that the share of chemical pulp is greater in the surface layer (1a) than in the back (1b; 1c, 1b) forming the rest of the base paper, and the share of mechanical pulp and/or broke is greater in the back than in the surface layer.

4. A base paper according to claim 2, **characterised** in that the share of chemical pulp is greater in the back layer (1b) than in the layer adjacent to it, such as an intermediate layer (1c) or a surface layer (1a).

5. A base paper according to any of the preceding claims, **characterised** in that its grammage is below 180 g/m² and not less than 80 g/m², preferably 80 to 120 g/m².

6. A plastic-coated wallpaper comprising a base paper (1) manufactured of a fibre material and a plastic coating (2) spread as a dispersion on top of the base paper and forming a uniform tight plastic surface, *e.g.* a PVC-based coating, **characterised** in that the base paper consists of at least two fibrous layers (1a, 1b).

7. A wallpaper according to claim 6, **characterised** in that the fibre compositions of the fibrous layers (1a, 1b) of the base paper are different.

8. A wallpaper according to claim 7, **characterised** in that the share of chemical pulp is greater in the surface layer (1a) directly underneath the plastic coating than in the back (1b; 1c, 1b) forming the rest of the base paper, and the share of mechanical pulp and/or broke is greater in the back than in the surface layer.

9. A wallpaper according to claim 7, **characterised** in that the share of chemical pulp is greater in the back layer (1b) than in the layer adjacent to it, such as an intermediate layer (1c) or a surface layer (1a).

10. A wallpaper according to any of the claims 6 to 8, **characterised** in that the grammage of the base paper (1) is below 180 g/m² and not less than 80 g/m², preferably 80 to 120 g/m².
